# EUROPÄISCHE PATENTSCHRIFT

(11) **EP 1 339 546 B1**
(45) Veröffentlichungstag und Bekanntmachung des Hinweises auf die Patenterteilung: **11.01.2006**
(21) Anmeldenummer: 01997392.4
(22) Anmeldetag: 02.11.2001
(51) Int. Cl.: B32B 27/28, C08L 69/00

(54) **THERMOPLASTISCH FORMBARER POLYCARBONAT-VERBUNDWERKSTOFF, VERFAHREN ZU SEINER HERSTELLUNG, SEINE VERWENDUNG SOWIE FLAMMGESCHÜTZTES POLYCARBONAT-FORMTEIL**
POLYCARBONATE COMPOSITE MATERIAL WHICH CAN BE THERMOPLASTICALLY SHAPED, METHODS FOR THE PRODUCTION THEREOF, USE OF THE SAME AND A FLAME-PROOF POLYCARBONATE MOULDED PART
MATERIAU COMPOSITE THERMOPLASTIQUE FACONNABLE A BASE DE POLYCARBONATE, PROCEDES PERMETTANT DE LE PRODUIRE, SON UTILISATION ET PIECE MOULEE EN POLYCARBONATE IGNIFUGEE

(30) Priorität: 22.11.2000 DE 10058150
(43) Veröffentlichungstag der Anmeldung: 03.09.2003
(73) Patentinhaber: Röhm GmbH & Co. KG, 64293 Darmstadt (DE)
(72) Erfinder: BUMANN, Detlef, 64665 Alsbach-Hähnlein (DE); FETZER, Andreas, 64404 Bickenbach (DE); MEIER-KAISER, Michael, 64665 Alsbach-Hähnlein (DE)
(86) Internationale Anmeldenummer: PCT/EP2001/012680
(87) Internationale Veröffentlichungsnummer: WO 2002/042072

(56) Entgegenhaltungen:
- EP-A- 0 510 927
- WO-A-94/02533
- DE-A- 4 443 164
- US-A- 3 928 708
- US-A- 5 024 877
- DATABASE WPI Derwent Publications Ltd., London, GB; AN 1985034867 XP002189934 & JP 59 228887 A (OTSUKA KAGU KOGYO KK), 22. Dezember 1984 (1984-12-22)

## Beschreibung

Die vorliegende Erfindung betrifft thermoplastisch formbare Polycarbonat-Verbundwerkstoffe, Verfahren zu ihrer Herstellung, ihre Verwendung sowie flammgeschützte Polycarbonat-Formteile. Insbesondere bezieht sich die Erfindung auf thermoplastisch formbare Polycarbonat-Verbundwerkstoffe, die zur Herstellung von flammgeschützten Polycarbonat-Formteilen mit ansprechender und funktioneller Oberflächengestaltung verwendet werden können.

Polycarbonat-Formteile sind bereits seit langem bekannt. Sie finden in breitem Umfang Anwendung in den Sektoren Elektrotechnik und Elektronik (Herstellung von Steckern, Steckverbindungen, Schaltern, Bauteilgehäusen, Leiterplatten, Verteilerkästen u.a.), Datenverarbeitung (optische Datenspeicher-Platten), Lichttechnik (Leuchtenabdeckungen, Lampengehäuse, beleuchtete Schilder, lichtleitende Systeme), Optik (optische Linsen, die durch Beschichtungen kratzfest ausgerüstet werden können), Haushaltstechnik (Gehäuse für Küchengeräte, Ventilatoren, Staubsauger; Mikrowellen-festes Geschirr u.a.), Freizeit-Industrie (Schutz-, Sturzhelme, bruchsichere Schutzbrillen), Bauwesen (lichtdurchlässige Überdachungen, Schallschutzwände) und Fahrzeugbau [Innenverkleidung von Bussen, Eisenbahnwaggons und Flugzeugen, Armaturentafeln, Leuchtenabdeckungen, Stoßdämpfer (aus Polycarbonat-Blends, z.B. mit ABS) und Karosserieteile] (CD Römpp Chemie Lexikon - Version 1.0, Stuttgart/New York: Georg Thieme Verlag 1995).

In vielen Anwendungsbereichen ist die selbstverlöschende Eigenschaft der Polycarbonate nicht ausreichend. Beispielsweise müssen Polycarbonate für Anwendungen im Flugzeugbau besonders hohen Brandschutzbestimmungen genügen, die sie bisher nur durch Zusatz von Flammschutzmitteln und/oder flammhemmenden Additiven erfüllen konnten. Aufgrund der Gegenwart der Flammschutzmittel und/oder der flammhemmenden Additive sind derartige Polycarbonat-Formteile nicht mehr transparent und im allgemeinen leicht bis stark verfärbt.

Vom Verbraucher werden Polycarbonat-Formteile mit einer ansprechenden Sichtseite gewünscht. Dies wird für flammhemmend ausgerüstete Typen momentan mittels gedeckter Einfärbung und gegebenenfalls Strukturierung der Oberfläche erreicht.
Extrusionstechnisch sind hierbei bevorzugt Uni-Farben darstellbar. Teilweise werden die Formteil-Oberflächen unter Verwendung von speziellen, flammhemmenden Lacken dekoriert. Nachteilig an dieser Vorgehensweise ist, daß die entsprechenden Lackier-Verfahren sehr aufwendig sind und viele gewünschten Oberflächeneffekte und funktionelle Oberflächengestaltungen nicht realisiert werden können. Weiterhin sind die aufgebrachten Dekore nur unzureichend gegen mechanische Einwirkungen geschützt.
In Anbetracht des Standes der Technik war es nun Aufgabe der vorliegenden Erfindung, einen thermoplastisch formbaren Polycarbonat-Verbundwerkstoff zur Verfügung zu stellen, der die Herstellung von flammgeschützten Polycarbonat-Formteilen mit ansprechender und funktioneller Oberflächengestaltung ermöglicht, welche über Uni-Farben hinausgehen. Insbesondere sollten bisher unbekannte flammgeschützte Polycarbonat-Formteile mit funktionellen Oberflächeneffekten herstellbar sein.
Eine weitere Aufgabe bestand darin, einen thermoplastisch formbaren Polycarbonat-Verbundwerkstoff anzugeben, der den geltenden Brandschutzbestimmungen, insbesondere denen der Flugzeugindustrie genügt. Der thermoplastisch formbare Polycarbonat-Verbundwerkstoff sollte auf einfache Art und Weise kostengünstig herstellbar sein.

Der vorliegenden Erfindung lag auch die Aufgabe zugrunde, ein kostengünstig durchführbares Verfahren zur Herstellung des erfindungsgemäßen thermoplastisch formbaren Polycarbonat-Verbundwerkstoffes anzugeben, das großtechnisch anwendbar ist. Darüber hinaus sollte das Verfahren mit kommerziell erhältlichen Komponenten leicht und einfach ausführbar sein.

Aufgabe der Erfindung war auch die Bereitstellung von einem Polycarbonat-Formteil mit ansprechender und funktioneller Oberflächengestaltungen. Dabei sollte die Oberflächengestaltung gegen äußere Einflüsse, wie Umwelteinflüsse und mechanische Einwirkungen, geschützt sein. Verwendungsmöglichkeiten des erfindungsgemäßen Polycarbonat-Formteiles sollten ebenfalls angegeben werden.

Gelöst werden diese sowie weitere nicht explizit genannte Aufgaben, die jedoch aus den hierin einleitend diskutierten Zusammenhängen ohne weiteres ableitbar oder erschließbar sind, durch einen thermoplastisch formbaren Polycarbonat-Verbundwerkstoff mit allen Merkmalen des Patentanspruchs 1. Zweckmäßige Abwandlungen des erfindungsgemäßen thermoplastisch formbaren Polycarbonat-Verbundwerkstoffes werden in den auf Anspruch 1 rückbezogenen Unteransprüchen unter Schutz gestellt. Verfahren zur Herstellung des erfindungsgemäßen thermoplastisch formbaren Polycarbonat-Verbundwerkstoffes werden in den Verfahrensansprüchen beschrieben. Weiterhin wird ein flammgeschütztes Polycarbonat-Formteil beansprucht, das ausgehend vom thermoplastisch formbaren Polycarbonat-Formteil durch thermoplastisches Formen erhältlich ist. Der Anspruch der Verwendungskategorie schützt eine bevorzugte Verwendung vom erfindungsgemäßen, flammgeschützten Polycarbonat-Formteil.

Dadurch, daß man einen thermoplastisch formbaren Polycarbonat-Verbundwerkstoff mit mindestens zwei Schichten zur Verfügung stellt, welcher mindestens eine Schicht mit einem LOI-Wert kleiner 29 und mindestens eine Schicht mit einem LOI-Wert größer 29 aufweist, gelingt es auf nicht ohne weiteres vorhersehbare Weise, einen thermoplastisch formbaren Polycarbonat-Verbundwerkstoff mit ansprechender und funktioneller Oberflächengestaltung zugänglich zu machen. Er ermöglicht auf einfache Art und Weise, großtechnisch und kostengünstig die Herstellung von einem Polycarbonat-Formteil mit ansprechender und funktioneller Oberflächengestaltung. Dabei können neue bisher nicht bekannte Oberflächengestaltungen und -effekte realisiert werden.

Daß man ein flammgeschütztes Polycarbonat-Formteil ausgehend von einem thermoplastisch formbaren Polycarbonat-Verbundwerkstoff mit wenigstens zwei Schichten, der sich dadurch auszeichnet, daß mindestens eine Schicht einen LOI-Wert kleiner 29 und mindestens eine Schicht einen LOI-Wert größer 29 aufweist, durch thermoplastisches Formen erhalten kann, ist insbesondere deswegen überraschend, weil Polycarbonate mit einem LOI-Wert kleiner 29 den üblichen Brandschutzbestimmungen, insbesondere im Bereich des Flugzeugbaus, nicht genügen. Zugleich lassen sich durch das erfindungsgemäße Verfahren weitere Vorteile erzielen. Hierzu gehören unter anderem:
⇒ Die Oberflächen des erfindungsgemäßen thermoplastisch formbaren Verbundwerkstoffes und des daraus herstellbaren Formteils müssen nicht lackiert werden.
⇒ Die erfindungsgemäße Oberflächengestaltung des erfindungsgemäßen thermoplastisch formbaren Verbundwerkstoffes und des daraus herstellbaren Formteils ist gegen mechanische Einwirkungen geschützt

Die vorliegende Erfindung bezieht sich auf thermoplastische formbare Polycarbonate. Polycarbonate sind dem Fachmann bekannte Kunststoffe. Sie bezeichen thermoplastische Polymere mit der allgemeinen Strukturformel 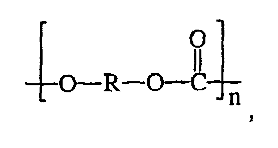 die formal als Polyester aus Kohlensäure und aliphatischen oder aromatischer Dihydroxy-Verbindung betrachtet werden können. Dabei bezeichnet der Rest R zweibindige aliphatische, cycloaliphatische oder aromatische Gruppen, die sich von den entsprechenden Dihydroxyverbindungen ableiten.

Zu den erfindungsgemäß einsetzbaren Polycarbonaten gehören Homopolycarbonate, Copolycarbonate, unverzweigte Polycarbonate, verzweigte Polycarbonate und Mischungen der genannten Polycarbonate.

Im Rahmen der vorliegenden Erfindung werden aromatische Reste R bevorzugt. Dazu gehören unter anderem Reste, die sich vom Hydrochinon, Resorcinol, 4,4'-Dihydroxydiphenol, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorophenyl)-propan, 2,2-Bis-(4-hydroxy-3,5-dibromophenyl)-propan, 1,1-Bis-(4-hydroxyphenyl)-cyclohexan oder vom 1,1-Bis-(4-hydroxyphenyl)-3,3,5-trimethyl cyclohexan ableiten. Besonders bevorzugte Reste R leiten sich vom 2,2-Bis-(4-hydroxyphenyl)-propan oder vom 1,1-Bis-(4-hydroxyphenyl)-cyclohexan ab.

Die Reste R können gegebenenfalls weitere Substituenten, vorzugsweise Methyl- oder Halogengruppen tragen. Besonders bevorzugte Substituenten sind Brom- und Chloratome.

Die erfindungsgemäßen Polycarbonate haben vorzugsweise ein Gewichtsmittel des Molekulargewichts im Bereich zwischen 10.000 g/mol und 200.000 g/mol. Besonders bevorzugt ist ein Gewichtsmittel des Molekulargewichts im Bereich zwischen 10.000 g/mol und 100.000 g/mol, insbesondere zwischen 15.000 g/mol und 45.000 g/mol.

Die erfindungsgemäßen Polycarbonate können weitere mit Polycarbonat mischbare Polymere enthalten. Hierzu gehören unter anderem Poly(meth)acrylate, Polyester, Polyamide, Polyimide, Polyurethane, Polyether, ABS, ASA und PBT.

Mischbarkeit der verschiedenen Substanzen bedeutet im Sinne der vorliegenden Erfindung, daß die Komponenten eine homogene Mischung bilden.

Des weiteren können die Polycarbonate in der Fachwelt weithin bekannte Zusatzstoffe enthalten. Hierzu gehören unter anderem Antistatika, Antioxidantien, Farbstoffe, Füllstoffe, Lichtstabilisatoren, Pigmente, UV-Absorber, Verwitterungsschutzmittel und Weichmacher.

Gemäß der vorliegenden Erfindung weist der thermoplastisch formbare Polycarbonat-Verbundwerkstoff mindestens zwei Schichten auf, die sich bezüglich ihrem LOI-Wert unterscheiden. Der Begriff "Schicht" ist dem Fachmann bestens bekannt. Schichten bezeichnen im Sinne der vorliegenden Erfindung bezüglich dem LOI-Wert homogene Bereiche, die durch scharfe Grenzflächen gegeneinander und gegen die Umgebung abgegrenzt sind. Die Form der Schichten ist im Rahmen der vorliegenden Erfindung beliebig. Erfindungsgemäß bevorzugte Schichtenformen sind mittels Extrusion erhältlich.

Erfindungsgemäß weist mindestens eine Schicht des thermoplastisch formbaren Polycarbonat-Verbundwerkstoffes einen LOI-Wert kleiner 29 und mindestens eine Schicht einen LOI-Wert größer 29 auf. Der LOI-Wert ist eine dem Fachmann bekannte Kurzbezeichnung für den sogenannten Sauerstoff-Index (abgeleitet von der englischen Bezeichnung "limiting oxygen index"), der den Grenzwert des Volumenverbrauchs an Sauerstoff in einer Sauerstoff/Stickstoff-Mischung angibt, bei dem das Material nach dem Entzünden einer Fremdflamme gerade noch von selbst weiterbrennt. Er wird üblicherweise nach der Prüfmethode ASTM D 2863 bestimmt. Einfaches Polycarbonat, welches kein Flammschutzmittel oder flammhemmende Additive enthält, hat üblicherweise einen LOI-Wert von 26. Durch Zusatz von Flammschutzmitteln und/oder flammhemmenden Additiven kann der LOI-Wert auf 32-35 erhöht werden (Bodo Carlowitz *Kunststofftabellen* 4. Auflage; München, Wien; Hanser 1995 S.146).

Flammschutzmittel und/oder flammhemmende Additive sind dem Fachmann bekannt. Sie bezeichnen solche anorganischen und/oder organischen Stoffe, die insbesondere Holz und Holzwerkstoffe, Kunststoffe, Textilien flammfest machen (flammhemmend ausrüsten) sollen. Sie erreichen dies, indem sie die Entflammung der zu schützenden Stoffe verhindern, die Entzündung behindern und die Verbrennung erschweren. Unter anderem umfassen Flammschutzmittel und/oder flammhemmende Additive Stoffe, die feuererstickend, verkohlungsfördernd, sperrschicht- und/oder dämmschichtbildend wirken. Dazu gehören unter anderem spezielle anorganische Verbindungen, wie Aluminiumoxidhydrate, Aluminiumhydroxide, Wasserglas, Borate, insbesondere Zinkborate, Antimonoxid (meist zusammen mit organischen Halogen-Verbindungen), Ammoniumphosphate, wie (NH₄)₂HPO₄, und Ammoniumpolyphosphate.
Weitere erfindungsgemäß einsetzbare Flammschutzmittel und/oder flammhemmende Additive umfassen halogenierte organische Verbindungen, wie beispielsweise Chlorparaffine, Hexabrombenzol, bromierte Diphenylether und andere Brom-Verbindungen, organische Phosphor-Verbindungen, vor allem Phosphate, Phosphite und Phosphonate, insbesondere solche mit Weichmacher-Wirkung, wie Triskresylphosphat, halogenierte organische Phosphor-Verbindungen, wie Tri(2,3-dibrompropyl)-phosphat oder Tris-(2-brom-4-methylphenyl)-phosphat.

Darüber hinaus gehören zu den erfindungsgemäß einsetzbaren Flammschutzmitteln und/oder flammhemmenden Additiven auch solche Substanzen, die sich beim Erwärmen schaumig aufblähen, ab 250°C bis 300°C verkohlen, sich dabei verfestigen und ein feinporiges, gut isolierendes Polster bilden; wie beispielsweise Gemische aus Harnstoff, Dicyandiamid, Melamin und organischen Phosphaten.

Die Flammschutzmittel und/oder flammhemmenden Additive können dem Polycarbonat bereits bei dessen Herstellung beigefügt werden. Auch der Einbau von flammhemmenden Verbindungen als Monomere in die Polycarbonat-Makromoleküle ist denkbar.

Vorzugsweise werden solche Flammschutzmittel und/oder flammhemmende Additive bevorzugt, die im Falle eines Brandes keine umweltgefährdenden Stoffe, wie toxische Phosphate und hochtoxische Dioxine bilden.

In einer bevorzugten Ausführungsform der vorliegenden Erfindung weist die mindestens eine Schicht mit einem LOI-Wert kleiner 29 einen LOI-Wert kleiner 28, vorzugsweise kleiner 27 auf.

In einer weiteren bevorzugten Ausführungsform der vorliegenden Erfindung weist die mindestens eine Schicht mit einem LOI-Wert größer 29 einen LOI-Wert größer 30, vorzugsweise größer 31 auf.

Im Rahmen der vorliegenden Erfindung ist die mindestens eine Schicht mit einem LOI-Wert größer 29 vorzugsweise erhältlich aus einer Mischung bestehend aus
a) 40 bis 100 Gew.-% bezogen auf das Gesamtgewicht der Mischung wenigstens eines Polycarbonates
b) 0 bis 40 Gew.-% bezogen auf das Gesamtgewicht der Mischung wenigstens eines Polymers aus der Gruppe bestehend aus Poly(meth)acrylate, Polyester, Polyamide, Polyimide, Polyurethane, Polyether, ABS, ASA und PBT.
c) 0 bis 10 Gew.-% bezogen auf das Gesamtgewicht der Mischung wenigstens eines Flammschutzmittels und/oder flammhemmenden Additivs
d) 0 bis 10 Gew.-% bezogen auf das Gesamtgewicht der Mischung wenigstens eines Zusatzstoffes aus der Gruppe bestehend aus Antistatika, Antioxidantien, Farbstoffe, Füllstoffe, Lichtstabilisatoren, Pigmente, UV-Absorber, Verwitterungsschutzmittel und Weichmacher,

wobei die Summe von a), b), c) und d) 100 Gew.-% ergibt.

Es ist ebenfalls bevorzugt, daß die mindestens eine Schicht mit einem LOI-Wert kleiner 29 erhältlich aus einer Mischung bestehend aus
e) 40 bis 100 Gew.-% bezogen auf das Gesamtgewicht der Mischung wenigstens eines Polycarbonates
f) 0 bis 40Gew.-% bezogen auf das Gesamtgewicht der Mischung wenigstens eines Polymers aus der Gruppe bestehend aus Poly(meth)acrylate, Polyester, Polyamide, Polyimide, Polyurethane, Polyether, ABS, ASA und PBT
g) 0 bis 10 Gew.-% bezogen auf das Gesamtgewicht der Mischung wenigstens eines Zusatzstoffes aus der Gruppe bestehend aus Antistatika, Antioxidantien, Farbstoffe, Füllstoffe, Lichtstabilisatoren, Pigmente, UV-Absorber, Verwitterungsschutzmittel und Weichmacher,

wobei die Summe von e), f), und g) 100 Gew.-% ergibt.

Die Anzahl der Schichten vom erfindungsgemäßen thermoplastisch formbaren Polycarbonat-Verbundwerkstoff hängt von dem gewünschten Einsatzgebiet ab. Dabei besteht der erfindungsgemäße thermoplastisch formbare Polycarbonat-Verbundwerkstoff aus mindestens 2 Schichten, vorzugsweise aus 2, 3, 4 oder 5 Schichten.

Bestimmte Materialeigenschaften des erfindungsgemäßen, thermoplastisch formbaren Polycarbonat-Verbundwerkstoffes, inbesondere seine Brennbarkeit, können durch das Verhältnis der Dicke von der mindestens einen Schicht mit einem LOI-Wert kleiner 29 und der Dicke von der mindestens einen Schicht mit einem LOI-Wert größer 29 beeinflußt werden. Vorzugsweise liegt dieses Verhältnis im Bereich zwischen 0,01 und 0,5.

Auch das Verhältnis der Masse von der mindestens einen Schicht mit einem LOI-Wert kleiner 29 und der Masse von der mindestens einen Schicht einen LOI-Wert größer 29 kann einige Materialeigenschaften des erfindungsgemäßen, thermoplastisch formbaren Polycarbonat-Verbundwerkstoffes, insbesondere seine Brennbarkeit beeinflussen. Vorzugsweise liegt dieses Verhältnis ebenfalls im Bereich zwischen 0,01 und 0,5.

In einer bevorzugten Ausführungsform der vorliegenden Erfindung ist die mindestens eine Polycarbonat-Schicht mit einem LOI-Wert kleiner 29 zwischen 30 µm bis 500 µm dick. Weiterhin ist es im Rahmen der vorliegenden Erfindung bevorzugt, daß die mindestens eine Polycarbonat-Schicht mit einem LOI-Wert größer 29 zwischen 0,7 mm bis 3 mm dick ist.

Im Rahmen der vorliegenden Erfindung wird ein thermoplastisch formbarer Polycarbonat-Verbundwerkstoff bevorzugt, der sich dadurch auszeichnet, daß eine Polycarbonat-Schicht mit einem LOI-Wert kleiner 29 eine Außenschicht des Polycarbonat-Verbundwerkstoffes ist.

In einer besonders bevorzugten Ausführungsform der vorliegenden Erfindung weist der thermoplastisch formbare Polycarbonat-Verbundwerkstoff zwischen einer Schicht mit einem LOI-Wert größer 29 und einer Schicht mit einem LOI-Wert kleiner 29 eine dritte Schicht auf, wobei die dritte Schicht eine Dekorschicht ist.

Es ist für den Fachmann offensichtlich, daß der erfindungsgemäße thermoplastisch formbare Polycarbonat-Verbundwerkstoff weitere Schichten aufweisen kann. Beispielsweise kann er weitere Polycarbonat-Schichten aufweisen, die sich in ihrer Zusammensetzung von den bisherigen Schichten unterscheiden. Er kann weitere Dekorschichten/Druckschichten aufweisen. Des weiteren kann der thermoplastisch formbare Polycarbonat-Verbundwerkstoff auch Klebstoffschichten enthalten, die sowohl zum Verbinden von Schichten aus unterschiedlichen Kunststoffen als auch zum Befestigen der Folien auf den zu schützenden Gegenständen dienen können. Weiterhin kann auch die Schichtreihenfolge variiert sein.

Der erfindungsgemäße thermoplastisch formbare Polycarbonat-Verbundwerkstoff genügt höchsten brandschutztechnischen Anforderungen, insbesondere denen aus dem Bereich des Flugzeugbaus. Für den Bereich der Luftfahrtindustrie sind die Anforderungen der amerikanischen Behörden weltweit bindend (FAR, Part 25, Amdt. 25-72, App. F, Part I (b) (4), Vertical Test; App. F., Part I (b) (5), Horizontal Test). Je nach Anwendungsbereich, beispielsweise Wand- und Deckenplatten, Kabel und Leitungen sind eine limitierte Abbrandstrecke sowie eine limitierte Nachbrenndauer am Prüfling und eventuell nicht brennendes Abtropfen nachzuweisen. Dabei wird gemäß FAR (FAR 25.853 (a) (1) (i), (ii), (iv) oder (v)) eine längliche Probe (streifenförmig; 305 mm x 75 mm) horizontal von der Seite oder vertikal von unten her beflammt. Der vertikale Beflammungstest wird erfindungsgemäß bevorzugt.

Um die derzeitig geltenden Anforderungen zu erfüllen, darf bei einer Kantenbeflammung des Prüfkörpers für 60 bzw. 12 Sekunden die Nachbrenndauer 15 Sekunden nicht übersteigen, die zerstörte Länge darf maximal 150 bzw. 200 mm betragen und die Brenndauer von abtropfendem Material muß kleiner 3 bzw. 5 Sekunden sein.

In einer bevorzugten Ausführungsform der vorliegenden Erfindung weist der thermoplastisch formbare Polycarbonat-Verbundwerkstoff der vorliegenden Erfindung bei einer vertikalen Kantenbeflammung für 60 Sekunden gemäß FAR 25.853 (a) (1) (i) eine zerstörte Länge kleiner 150 mm, vorzugsweise kleiner 120 mm auf, die Nachbrenndauer ist kürzer als 15 Sekunden, vorzugsweise kürzer als 9 Sekunden und die Brenndauer von abtropfendem Material ist kleiner 3 Sekunden, vorzugsweise kleiner 2 Sekunden.

Im Rahmen der vorliegenden Erfindung werden weiterhin thermoplastisch formbare Polycarbonat-Verbundwerkstoffe bevorzugt, die bei einer vertikalen Kantenbeflammung für 12 Sekunden gemäß FAR 25.853 (a) (1) (ii) eine zerstörte Länge kleiner 200 mm, vorzugsweise kleiner 50 mm aufweisen, bei welchen die Nachbrenndauer kürzer als 15 Sekunden, vorzugsweise kürzer als 7 Sekunden ist und die Brenndauer von abtropfendem Material 5 Sekunden, vorzugsweise 1 Sekunden nicht übersteigt.

Entsprechend der FAR und Airbus-Industrie müssen Materialien für den Flugzeuginnenausbau weiterhin bestimmte Rauchdichte-Grenzwerte in der NBS-Kammer einhalten (FAR 25.853 (c); AITM 2.0007) (FAR, Part 25, Amdt. 25-72, App. F, Part V: Test Method to determine the Smoke Emission Characteristics of Cabin Materials)(Airbus Industrie Technical Specification ATS-1000.001, Ausgabe 5; Airbus Directives ABD0031). Bei diesem Versuch wird in der NBS-Kammer ein senkrecht angeordneter, quadratischer Prüfkörper (74 mm ± 1 mm x 74 mm ± 1 mm) von einer elektrischen Strahlungsheizquelle mit 1 = 25 kW/m² bestrahlt und auf diese Weise pyrolytisch zersetzt. Mittels eines Photometersystems wird die Schwächung eines Lichtbündels infolge freigesetzter partikelförmiger Rauchteilchen in Abhängigkeit von der Zeit gemessen. Der Versuch wird 6 Minuten lang unter Schwelbedingungen (ohne Zündflamme) oder mit Zündflamme durchgeführt. Die zu berechnende spezifische optische Dichte soll während eines Versuchszeitraumes von vier Minuten nicht über Dsₘₐₓ = 200 liegen.

In einer bevorzugten Ausführungsform der vorliegenden Erfindung zeichnet sich der thermoplastisch formbare Polycarbonat-Verbundwerkstoff dadurch aus, daß die spezifische optische Dichte gemäß FAR 25.853 (c) und AITM 2.0007 während eines Versuchszeitraumes von vier Minuten nicht über Dsₘₐₓ = 200, vorzugsweise nicht über Dsₘₐₓ = 140 liegt.
Die Bewertung der Toxizität der Brandgase erfolgt gemäß der Airbus-Spezifikation AITM 3.0005 (Airbus Industrie Technical Specification ATS-1000.001, Ausgabe 5; Airbus Directives ABD0031) anhand analytisch bestimmter Konzentrationswerte verschiedener Rauchgaskomponenten während der Prüfung in der NBS-Kammer. Dabei liegen die derzeitig gültigen Grenzwerte gemäß ATS für Kohlenmonoxid CO bei 3500 ppm, für Schwefeldioxid SO₂ bei 100 ppm, für Chlorwasserstoff HCl bei 150 ppm, für Blausäure HCN bei 150 ppm, für Fluorwasserstoff bei 100 ppm und für die nitrosen Gase Stickstoffmonoxid NO und Stickstoffdioxid NO₂ bei 100 ppm.
Erfindungsgemäß werden thermoplastisch formbare Polycarbonat-Verbundwerkstoffe bevorzugt, deren Brandgase während der Prüfung in der NBS-Kammer gemäß AITM 3.0005 maximal 3500 ppm, vorzugsweise maximal 300 ppm Kohlenmonoxid, maximal 100 ppm, vorzugsweise kein Schwefeldioxid, maximal 100 ppm, vorzugsweise kein Chlorwasserstoff, maximal 150 ppm, vorzugsweise maximal 2 ppm Blausäure, maximal 100 ppm, vorzugsweise kein Fluorwasserstoff und maximal 100 ppm, vorzugsweise maximal 3 ppm Stickstoffmonoxid und Stickstoffdioxid aufweisen.

Verfahren zur Herstellung des erfindungsgemäßen thermoplastisch formbaren Polycarbonat-Verbundwerkstoffes sind dem Fachmann offensichtlich. Ein im Rahmen der vorliegenden Erfindung bevorzugtes Verfahren ist die Extrusion. Dabei werden zunächst mindestens zwei Polycarbonat-Trockenmischungen eingesetzt, die gegebenenfalls weitere Komponenten enthalten, und wobei mindestens eine Trockenmischung einen LOI-Wert größer 29 und mindestens eine Trockenmischung einen LOI-Wert kleiner 29 aufweist.

Trockenmischen bedeutet im Rahmen der Erfindung, daß aus dieser Mischung im Lauf des weiteren Verfahrens kein Lösungsmittel entfernt werden muß. Lösungmittelreste, die keine weitere Aufarbeitung benötigen bzw. im Extruder durch Vakuum von der Mischung getrennt werden können, sind erlaubt. Vorzugsweise enthalten die Trockenmischung weniger als 0,01 Gew.-% Lösungsmittel bezogen auf das Gesamtgewicht der Trockenmischung.

Das Mischen kann in herkömmlichen, für diesen Zweck weithin bekannten Vorrichtungen erfolgen. Die Temperatur bei der das Mischen erfolgt, liegt unterhalb der Geltemperatur der jeweiligen Mischung. Bevorzugt wird dieser Schritt bei Raumtemperatur durchgeführt.

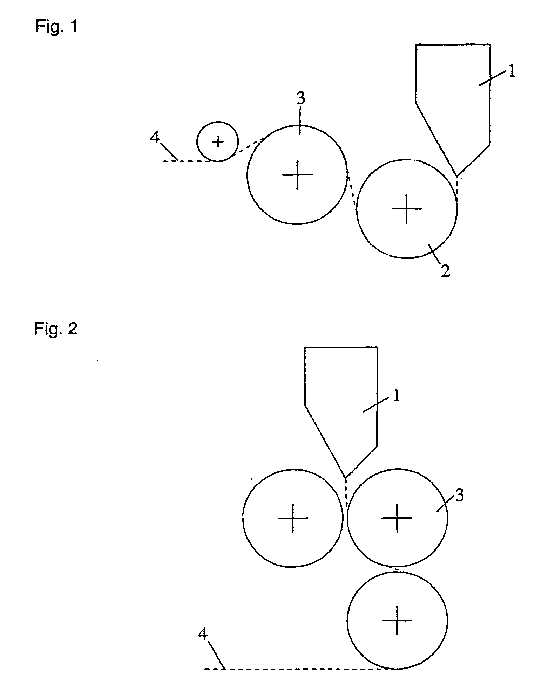

Die Trockenmischung mit einem LOI-Wert kleiner 29 wird separat auf ein Glättwerk extrudiert, dessen Walzen eine Temperatur kleiner als 140°C aufweist, wobei eine Folie geformt wird. Das Extrudieren von Polymeren zu Folien bzw. Schichten ist weithin bekannt und beispielsweise in Kunststoffextrusionstechnik II, Hanser Verlag, 1986, S.125 ff. beschrieben. Die Extrusion kann über das sogenannte "Chill-Roll"-Verfahren erfolgen, das in Fig. 1 schematisch dargestellt ist. Die heiße Schmelze wird aus der Düse des Extruders 1 auf eine Kühlwalze 2 gegeben, wobei zum Erhalt eines hohen Glanzes polierte Walzen verwendet werden. In dem erfindungsgemäßen Verfahren können aber auch andere Walzen als Kühlwalze verwendet werden. Eine weitere Walze 3 nimmt die auf der Walze 2 abgekühlte Schmelze zunächst auf, wobei man eine einschichtige Folie 4 erhält, die mit weiteren Schichten versehen werden kann. Alternativ kann die Extrusion auch in einem Glättwerk erfolgen, so wie dies schematisch in Fig. 2 dargestellt ist. Dabei wird die heiße Schmelze zwischen zwei oder mehreren Walzen 3 zu endlosen Folien 4 kalandiert.

Damit die entstehende Folie weitgehend frei von Verunreinigungen ist, wird vor dem Eintritt der Schmelze in die Düse ein Filter angeordnet. Die Maschenweite des Filters richtet sich im allgemeinen nach den eingesetzten Ausgangsstoffen und kann dementsprechend in weiten Bereichen variieren. Im allgemeinen liegen sie aber im Bereich von 300 µm bis 20 µm. Es können auch Filter mit mehreren Sieben unterschiedlicher Maschenweite vor dem Düseneintritt angeordnet werden. Diese Filter sind in der Fachwelt weithin bekannt und kommerziell erhältlich. Als weiteren Anhaltspunkt für den Fachmann können die beigefügten Beispiele dienen.
Um Folien mit hoher Güte zu erhalten, ist es des weiteren vorteilhaft besonders reine Rohstoffe einzusetzen.

Die Dicke der jeweiligen Folien bzw. Schichten kann über einen großen Bereich variieren, der im allgemeinen vom gewünschten Anwendungszweck abhängig ist. Wie bereits erwähnt liegt die bevorzugte Dicke mindestens einer Folie bzw. Schicht mit einem LOI-Wert kleiner 29 zwischen 30 µm und 500 µm und die bevorzugte Dicke mindestens einer Folie bzw. Schicht mit einem LOI-Wert größer 29 zwischen 0,7 mm und 3 mm. Die Folien- bzw. Schichtdicke kann über Parameter die dem Fachmann bekannt sind, eingestellt werden.

Der Druck mit dem die geschmolzenen Mischungen in die jeweiligen Düsen gepreßt werden, kann beispielsweise über die Geschwindigkeit der Schnecke gesteuert werden. Der Druck liegt im allgemeinen in einem Bereich von 40 bis 100 bar, ohne daß das erfindungsgemäße Verfahren hierdurch beschränkt wird. Weitere Hinweise bezüglich der allgemeinen Verfahrensparameter erhält der Fachmann durch die beigefügten Beispiele.

Damit die erhaltene Folien bzw. Schichten eine hohe Oberflächengüte und eine geringe Trübung aufweisen, ist es wesentlich, daß man die Temperatur der Düse höher als die Temperatur der Mischung vor dem Düseneintritt, aber niedriger als die Geltemperatur wählt.

Bevorzugt wird die Düsentemperatur 5%, besonders bevorzugt 10% und ganz besonders bevorzugt 15% höher eingestellt als die Temperatur der Mischung vor dem Düseneintritt. Dementsprechend liegen bevorzugte Temperaturen der Düse im Bereich von 283°C bis 345°C, besonders bevorzugt 297°C bis 345°C und ganz besonders bevorzugt 310°C bis 345°C.

Die aufzulaminierende Folie wird separat hergestellt, gegebenenfalls bedruckt und anschließend in dem Glättwerk auf das Grundsubstrat laminiert.

In einer bevorzugten Ausführungsform der vorliegenden Erfindung wird die Oberfläche mindestens einer Folie bzw. Schicht mit einem LOI-Wert kleiner 29 optisch gestaltet. Daran anschließend wird die optisch gestaltete Folie mit einem LOI-Wert kleiner 29 mit einer Folie bzw. Schicht mit einem LOI-Wert größer 29 derart laminiert, daß der resultierende thermoplastisch formbare Polycarbonat-Verbundwerkstoff mindestens eine Dekorschicht zwischen einer Schicht mit einem LOI-Wert kleiner 29 und einer Schicht mit einem LOI-Wert größer 29 aufweist.

Das Aufbringen dieser Schichten durch Kolamineren kann bei Raumtemperatur oder bei leicht erhöhter Temperatur erfolgen, so daß die Oberflächengüte und die Trübung der Schichten nicht geschmälert wird. Diese Verfahren sind in der Fachwelt weithin bekannt und beispielsweise in Kunststoffextrusionstechnik II, Hanser Verlag, 1986, S. 320 ff. beschrieben.

Im Rahmen der vorliegenden Erfindung ist es besonders vorteilhaft, daß die zuvor genannten Schritte, d.h., das Herstellen der Polycarbonatenthaltenden Folien bzw. Schichten, gegebenenfalls das Bedrucken und das Laminieren mit weiteren Schichten im allgemeinen in einem kontinuierlichen Verfahren durchgeführt werden.

Es wird eine Plattenware erhalten, aus der Polycarbonat-Formteile thermogeformt werden können. Thermoformung ist ein dem Fachmann bekanntes Verfahren zur Herstellung von Polymer-Formteilen, bei dem man aus einem thermoplastisch formbaren Polymer oberhalb einer bestimmten Temperatur die gewünschte Formteile formt. Dabei umfaßt "Formen" alle Tätigkeiten, die die Gestalt des formbaren Polymers verändern, wie uni- und biaxiales Verstrecken sowie die Fertigung von speziell geformten Formteilen. Im Rahmen der vorliegenden Erfindung wird der thermoplastisch formbare Verbundwerkstoff vorzugsweise bei einer Temperatur oberhalb von 165°C thermisch geformt.

Mögliche Einsatzgebiete für das erfindungsgemäße Polycarbonat-Formteil sind dem Fachmann offensichtlich. Es eignet sich insbesondere für alle Anwendungen, die für ein- oder mehrschichtige Polycarbonat-Formteile vorgezeichnet sind. Aufgrund ihrer charakteristischen Eigenschaften sind sie vor allem für Anwendungen in Bereichen, die hohen Brandschutzanforderungen genügen müssen, insbesondere für Anwendungen im Flugzeugbau, geeignet.

Die nachfolgenden Beispiele und das Vergleichsbeispiel dienen zur Erläuterung der Erfindung, ohne daß hierdurch eine Beschränkung erfolgen soll.

### Vergleichsbeispiel 1

Es wurde ein handelsübliches, flammgeschütztes, schwarz eingefärbtes Polycarbonat (z. B. MAKROLON®) mit einer glatten und einer strukturierten Seite verwendet. Die Materialdicke betrug 2,0 mm. Das Polycarbonat wies einen LOI-Wert gemäß ASTM D 2863 von 32-35 auf.

### a) Beflammungstests

Gemäß FAR 25.853 (a) (1) wurde eine längliche Probe (streifenförmig; 305 mm x 75 mm) horizontal von der Seite oder vertikal von unten her für 60 bzw. 12 Sekunden beflammt. Dabei wurden die entsprechenden Versuche 3 mal wiederholt. Die Ergebnisse sind in Tabelle 1 bis 4 zusammengefaßt und werden dort mit den derzeit erlaubten Grenzwerten verglichen.

**Tabelle 1: Beflammung von Vergleichsbeispiel 1; 60 s-vertikal; FAR 25.853 (a) (1) (i)**

| | Brennlänge in [mm] | Nachbrennzeit in [s] | |
|---|---|---|---|
| längs | | Probe | Tropfen |
| 1 | 75 | 2 | 0 |
| 2 | 80 | 0 | 0 |
| 3 | 70 | 0 | 0 |
| 4 | 75 | 1 | 0 |
| 5 | 70 | 7 | 6 |
| Mittelwert | 74 | 2 | 1 |
| Grenzwert | 152 | 15 | 3 |

**Tabelle 2: Beflammung von Vergleichsbeispiel 1; 60 s-horizontal; FAR 25.853 (a) (1) (iv)**

| | Brennlänge in [mm] | Nachbrennzeit in [s] | |
|---|---|---|---|
| quer | | Probe | Tropfen |
| 1 | 70 | 0 | 0 |
| 2 | 80 | 3 | 0 |
| 3 | 70 | 0 | 0 |
| 4 | 65 | 4 | 0 |
| 5 | 75 | 0 | 0 |
| Mittelwert | 72 | 1 | 0 |
| Grenzwert | 152 | 15 | 3 |

**Tabelle 3: Beflammung von Vergleichsbeispiel 1; 12 s-vertikal; FAR 25.853 (a) (1) (ii)**

| | Brennlänge in [mm] | Nachbrennzeit in [s] | |
|---|---|---|---|
| längs | | Probe | Tropfen |
| 1 | 10 | 2 | 0 |
| 2 | 15 | 2 | 0 |
| 3 | 15 | 2 | 0 |
| 4 | 15 | 3 | 0 |
| 5 | 15 | 3 | 0 |
| Mittelwert | 14 | 2 | 0 |
| Grenzwert | 203 | 15 | 5 |

**Tabelle 4: Beflammung von Vergleichsbeispiel 1; 12 s-horizontal; FAR 25.853 (a) (1) (v)**

| | Brennlänge in [mm] | Nachbrennzeit in [s] | |
|---|---|---|---|
| quer | | Probe | Tropfen |
| 1 | 15 | 2 | 0 |
| 2 | 15 | 1 | 0 |
| 3 | 10 | 2 | 0 |
| 4 | 15 | 3 | 0 |
| 5 | 15 | 2 | 0 |
| Mittelwert | 14 | 2 | 0 |
| Grenzwert | 152 | 15 | 3 |

### b) Rauchdichtemessungen

Gemäß der FAR 25.853 (c) und der AITM 2.0007 wurde in einer NBS-Kammer wurde ein senkrecht angeordneter, quadratischer Prüfkörper (74 mm ± 1 mm x 74 mm ± 1 mm) von einer elektrischen Strahlungsheizquelle mit I = 25 kW/m² bestrahlt und auf diese Weise pyrolytisch zersetzt. Mittels eines Photometersystems wurde die Schwächung eines Lichtbündels infolge freigesetzter partikelförmiger Rauchteilchen in Abhängigkeit von der Zeit gemessen. Der Versuch wird 6 Minuten lang unter Schwelbedingungen mit Zündflamme durchgeführt. Die berechneten Werte für die spezifische optische Dichte sind in Tabelle 5 zusammengefaßt werden mit dem derzeitig gültigem Grenzwert für thermoplastische Formteile Dsₘₐₓ = 200 (während eines Versuchszeitraumes von vier Minuten) verglichen.

**Tabelle 5: Rauchdichte-Prüfung mit Beflammung von Vergleichsbeispiel 1; FAR 25.853 (c)**

| Probe | Optische Dichte zur Zeit t in [min] | | | | | | | Ds max innerhalb 4 min |
|---|---|---|---|---|---|---|---|---|
| | 1 | 1,5 | 2 | 3 | 4 | 5 | 6 | |
| 1 | 4 | 19 | 45 | 67 | 89 | 109 | 122 | 89 |
| 2 | 8 | 24 | 36 | 73 | 92 | 117 | 137 | 92 |
| 3 | 5 | 20 | 39 | 77 | 105 | 122 | 141 | 105 |
| 4 | 5 | 18 | 43 | 67 | 84 | 92 | 102 | 84 |
| Mittelwert | 6 | 20 | 41 | 71 | 93 | 110 | 126 | 93 |
| Grenzwert gemäß FAR 25.853 (c) | | | | | | | | 200 |

### c) Rauchgasanalyse

Gemäß AITM 3.0005 wurde das Rauchgas in der NBS-Kammer mittels kolorimetrischer Prüfröhrchen analysiert. Der Ergebnisse werden in Tabelle 6 wiedergegeben und mit den derzeitig gültigen Grenzwerten gemäß ATS verglichen.

**Tabelle 6: Rauchgasanalyse von Vergleichsbeispiel 1; AITM 3.0005**

| Gaskomponente | Grenzwert in [ppm] nach 4 min | nachgewiesen in [ppm] nach 4 min |
|---|---|---|
| HCN | 150 | 0,0 |
| CO | 3500 | 200 |
| NO + NO₂ | 100 | 0,5 |
| SO₂ + H₂S | 100 | 0,0 |
| HF | 100 | ./. |
| HCl | 150 | ./. |

| | | |
|---|---|---|
| ./. nicht bestimmt | | |

### Beispiel 1:

Es wurde ein handelsübliches, flammgeschütztes, grau eingefärbtes Polycarbonat (z. B. MAKROLON®) mit einer glatten und einer strukturierten Seite verwendet (Materialdicke: 1,2 mm), das auf der strukturierten Seite mit einer nichtflammgeschützten Polycarbonat-Folie (Dicke: 80 µm) laminiert wurde. Das flammgeschützte Polycarbonat wies einen LOI-Wert gemäß ASTM D 2863 von 32-35, das nicht flammgeschützte einen LOI-Wert gemäß ASTM D 2863 von 26 auf.

### a) Beflammungstests

Durchführung wie Vergleichsbeispiel 1, Ergebnisse in Tabelle 7 bis 10

**Tabelle 7: Beflammung von Beispiel 1; 60 s-vertikal; FAR 25.853 (a) (1) (i)**

| | Brennlänge in [mm] | Nachbrennzeit in [s] | |
|---|---|---|---|
| längs | | Probe | Tropfen |
| 1 | 95 | 10 | 0 |
| 2 | 105 | 15 | 0 |
| 3 | 105 | 3 | 5 |
| 4 | 100 | 0 | 0 |
| 5 | 100 | 2 | 0 |
| Mittelwert | 101 | 6 | 1 |
| Grenzwert | 152 | 15 | 3 |

**Tabelle 8: Beflammung von Beispiel 1; 60 s-horizontal; FAR 25.853 (a) (1) (iv)**

| | Brennlänge in [mm] | Nachbrennzeit in [s] | |
|---|---|---|---|
| quer | | Probe | Tropfen |
| 1 | 100 | 2 | 0 |
| 2 | 100 | 0 | 0 |
| 3 | 105 | 3 | 15 |
| 4 | 115 | 9 | 0 |
| 5 | 100 | 6 | 0 |
| Mittelwert | 104 | 4 | 3 |
| Grenzwert | 152 | 15 | 3 |

**Tabelle 9: Beflammung von Beispiel 1;12 s-vertikal; FAR 25.853 (a) (1) (ii)**

| | Brennlänge in [mm] | Nachbrennzeit in [s] | |
|---|---|---|---|
| längs | | Probe | Tropfen |
| 1 | 15 | 1 | 0 |
| 2 | 15 | 2 | 0 |
| 3 | 20 | 1 | 0 |
| 4 | 15 | 3 | 0 |
| 5 | 20 | 2 | 0 |
| Mittelwert | 17 | 2 | 0 |
| Grenzwert | 203 | 15 | 5 |

**Tabelle 10: Beflammung von Beispiel 1; 12 s-horizontal; FAR 25.853 (a) (1) (v)**

| | Brennlänge in [mm] | Nachbrennzeit in [s] | |
|---|---|---|---|
| quer | | Probe | Tropfen |
| 1 | 15 | 0 | 0 |
| 2 | 20 | 3 | 0 |
| 3 | 20 | 2 | 0 |
| 4 | 20 | 4 | 0 |
| 5 | 15 | 1 | 0 |
| Mittelwert | 18 | 2 | 0 |
| Grenzwert | 152 | 15 | 3 |

### b) Rauchdichtemessungen

Durchführung wie Vergleichsbeispiel 1, Ergebnisse in Tabelle 11

**Tabelle 11: Rauchdichte-Prüfung mit Beflammung von Beispiel 1; FAR 25.853 (c)**

| Probe | Optische Dichte zur Zeit t in [min] | | | | | | | Ds max innerhalb 4 min |
|---|---|---|---|---|---|---|---|---|
| | 1 | 1,5 | 2 | 3 | 4 | 5 | 6 | |
| 1 | 8 | 28 | 55 | 75 | 82 | 87 | 92 | 82 |
| 2 | 13 | 33 | 46 | 65 | 92 | 105 | 113 | 92 |
| 3 | 5 | 36 | 59 | 75 | 84 | 87 | 92 | 84 |
| 4 | 4 | 17 | 29 | 47 | 62 | 75 | 87 | 62 |
| Mittelwert | 8 | 29 | 47 | 66 | 80 | 89 | 96 | 80 |
| Grenzwert gemäß FAR 25.853 (c) | | | | | | | | 200 |

### c) Rauchgasanalyse

Durchführung wie Vergleichsbeispiel 1, Ergebnisse in Tabelle 12

**Tabelle 12: Rauchgasanalyse von Beispiel 1; AITM 3.0005**

| Gaskomponente | Grenzwert in [ppm] nach 4 min | nachgewiesen in [ppm] nach 4 min |
|---|---|---|
| HCN | 150 | 0,5 |
| CO | 3500 | 200 |
| NO + NO₂ | 100 | 0,5 |
| SO₂ + H₂S | 100 | 0,0 |
| HF | 100 | ./. |
| HCl | 150 | ./. |

| | | |
|---|---|---|
| ./. nicht bestimmt | | |

### Beispiel 2:

Es wurde ein handelsübliches, flammgeschütztes, grau eingefärbtes Polycarbonat (z. B. MAKROLON®) mit einer glatten und einer strukturierten Seite verwendet (Materialdicke: 2,0 mm), das auf der strukturierten Seite mit einer nichtflammgeschützten Polycarbonat-Folie (Dicke: 90 µm) laminiert wurde. Das flammgeschützte Polycarbonat wies einen LOI-Wert gemäß ASTM D 2863 von 32-35, das nicht flammgeschützte einen LOI-Wert gemäß ASTM D 2863 von 26 auf.

### a) Beflammungstests

Durchführung wie Vergleichsbeispiel 1 (nur Vertikaltests), Ergebnisse in Tabelle 13 und 14

**Tabelle 13: Beflammung von Beispiel 2; 60 s-vertikal; FAR 25.853 (a) (1)**

| (i) | Brennlänge in [mm] | Nachbrennzeit in [s] | |
|---|---|---|---|
| längs | | Probe | Tropfen |
| 1 | 50 | 7 | 0 |
| 2 | 55 | 2 | 0 |
| 3 | 60 | 9 | 0 |
| 4 | 60 | 7 | 0 |
| 5 | 60 | 1 | 0 |
| Mittelwert | 57 | 5 | 0 |
| Grenzwert | 152 | 15 | 3 |

**Tabelle 14: Beflammung von Beispiel 2; 12 s-vertikal; FAR 25.853 (a) (1) (ii)**

| | Brennlänge in [mm] | Nachbrennzeit in [s] | |
|---|---|---|---|
| längs | | Probe | Tropfen |
| 1 | 20 | 2 | 0 |
| 2 | 20 | 1 | 0 |
| 3 | 20 | 1 | 0 |
| 4 | 20 | 2 | 0 |
| 5 | 20 | 0 | 0 |
| Mittelwert | 20 | 1 | 0 |
| Grenzwert | 203 | 15 | 5 |

### b) Rauchdichtemessungen

Durchführung wie Vergleichsbeispiel 1, Ergebnisse in Tabelle 15

**Tabelle 15: Rauchdichte-Prüfung mit Beflammung von Beispiel 2; FAR 25.853 (c)**

| Probe | Optische Dichte zur Zeit t in [min] | | | | | | | Ds max innerhalb 4 min |
|---|---|---|---|---|---|---|---|---|
| | 1 | 1,5 | 2 | 3 | 4 | 5 | 6 | |
| 1 | 6 | 26 | 50 | 89 | 109 | 127 | 132 | 109 |
| 2 | 3 | 11 | 26 | 59 | 82 | 98 | 117 | 82 |
| 3 | 5 | 25 | 60 | 102 | 113 | 122 | 127 | 113 |
| 4 | 3 | 14 | 54 | 113 | 167 | 175 | 175 | 167 |
| Mittel wert | 4 | 19 | 48 | 91 | 118 | 131 | 138 | 118 |
| Grenzwert gemäß FAR 25.853 (c) | | | | | | | | 200 |

### c) Rauchgasanalyse

Durchführung wie Vergleichsbeispiel 1, Ergebnisse in Tabelle 16

**Tabelle 16: Rauchgasanalyse von Beispiel 2; AITM 3.0005**

| Gaskomponente | Grenzwert in [ppm] nach 4 min | nachgewiesen in [ppm] nach 4 min |
|---|---|---|
| HCN | 150 | 0,0 |
| CO | 3500 | 200 |
| NO + NO₂ | 100 | 0,5 |
| SO₂ + H₂S | 100 | 0,0 |
| HF | 100 | ./. |
| HCl | 150 | ./. |

| | | |
|---|---|---|
| ./. nicht bestimmt | | |

### Beispiel 3:

Es wurde ein handelsübliches, flammgeschütztes, grau eingefärbtes Polycarbonat (z. B. MAKROLON®) mit einer glatten und einer strukturierten Seite verwendet (Materialdicke: 1,0 mm), das auf der strukturierten Seite mit einer nichtflammgeschützten Polycarbonat-Folie (Dicke: 175 µm) laminiert wurde. Das flammgeschützte Polycarbonat wies einen LOI-Wert gemäß ASTM D 2863 von 32-35, das nicht flammgeschützte einen LOI-Wert gemäß ASTM D 2863 von 26 auf.

### a) Beflammungstests

Durchführung wie Beispiel 2 (nur Vertikaltests), Ergebnisse in Tabelle 17 und 18

**Tabelle 17: Beflammung von Beispiel 3; 60 s-vertikal; FAR 25.853 (a) (1) (i)**

| | Brennlänge in [mm] | Nachbrennzeit in [s] | |
|---|---|---|---|
| längs | | Probe | Tropfen |
| 1 | 80 | 8 | 0 |
| 2 | 85 | 7 | 0 |
| 3 | 85 | 2 | 0 |
| 4 | 90 | 2 | 0 |
| 5 | 75 | 4 | 0 |
| Mittelwert | 83 | 5 | 0 |
| Grenzwert | 152 | 15 | 3 |

**Tabelle 18: Beflammung von Beispiel 3; 12 s-vertikal; FAR 25.853 (a) (1)**

| (ii) | Brennlänge in [mm] | Nachbrennzeit in [s] | |
|---|---|---|---|
| längs | | Probe | Tropfen |
| 1 | 25 | 2 | 0 |
| 2 | 25 | 4 | 0 |
| 3 | 25 | 3 | 0 |
| 4 | 25 | 10 | 0 |
| 5 | 25 | 2 | 0 |
| Mittelwert | 25 | 4 | 0 |
| Grenzwert | 203 | 15 | 5 |

### b) Rauchdichtemessungen

Durchführung wie Vergleichsbeispiel 1, Ergebnisse in Tabelle 19

**Tabelle 19: Rauchdichte-Prüfung mit Beflammung von Beispiel 3; FAR 25.853 (c)**

| Probe | Optische Dichte zur Zeit t in [min] | | | | | | | Ds max innerhalb 4 min |
|---|---|---|---|---|---|---|---|---|
| | 1 | 1,5 | 2 | 3 | 4 | 5 | 6 | |
| 1 | 23 | 30 | 34 | 55 | 67 | 77 | 84 | 67 |
| 2 | 16 | 35 | 47 | 65 | 79 | 89 | 98 | 79 |
| 3 | 16 | 26 | 33 | 54 | 59 | 69 | 79 | 59 |
| 4 | 14 | 25 | 40 | 77 | 95 | 109 | 122 | 95 |
| Mittelwert | 17 | 29 | 39 | 63 | 75 | 86 | 96 | 75 |
| Grenzwert gemäß FAR 25.853 (c) | | | | | | | | 200 |

### c) Rauchgasanalyse

Durchführung wie Vergleichsbeispiel 1, Ergebnisse in Tabelle 20

**Tabelle 20: Rauchgasanalyse von Beispiel 3; AITM 3.0005**

| Gaskomponente | Grenzwert in [ppm] nach 4 min | nachgewiesen in [ppm] nach 4 min |
|---|---|---|
| HCN | 150 | 0,0 |
| CO | 3500 | 180 |
| NO + NO₂ | 100 | 0,5 |
| SO₂ + H₂S | 100 | 0,0 |
| HF | 100 | ./. |
| HCl | 150 | ./. |

| | | |
|---|---|---|
| ./. nicht bestimmt | | |

### Beispiel 4:

Es wurde ein handelsübliches, flammgeschütztes, grau eingefärbtes. Polycarbonat (z. B. MAKROLON®) mit einer glatten und einer strukturierten Seite verwendet (Materialdicke: 2,0 mm), das auf der strukturierten Seite mit einer nichtflammgeschützten Polycarbonat-Folie (Dicke: 500 µm) laminiert wurde. Das flammgeschützte Polycarbonat wies einen LOI-Wert gemäß ASTM D 2863 von 32-35, das nicht flammgeschützte einen LOI-Wert gemäß ASTM D 2863 von 26 auf.

### a) Beflammungstests

Durchführung wie Beispiel 2 (nur Vertikaltests), Ergebnisse in Tabelle 21 und 22

**Tabelle 21: Beflammung von Beispiel 4; 60 s-vertikal; FAR 25.853 (a) (1)**

| (i) | Brennlänge in [mm] | Nachbrennzeit in [s] | |
|---|---|---|---|
| längs | | Probe | Tropfen |
| 1 | 50 | 0 | 0 |
| 2 | 45 | 1 | 0 |
| 3 | 50 | 1 | 0 |
| 4 | 45 | 1 | 0 |
| 5 | 45 | 5 | 0 |
| Mittelwert | 47 | 2 | 0 |
| Grenzwert | 152 | 15 | 3 |

**Tabelle 22: Beflammung von Beispiel 4; 12 s-vertikal; FAR 25.853 (a) (1) (ii)**

| | Brennlänge in [mm] | Nachbrennzeit in [s] | |
|---|---|---|---|
| längs | | Probe | Tropfen |
| 1 | 10 | 1 | 0 |
| 2 | 10 | 3 | 0 |
| 3 | 10 | 2 | 0 |
| 4 | 10 | 4 | 0 |
| 5 | 10 | 2 | 0 |
| Mittelwert | 10 | 2 | 0 |
| Grenzwert | 203 | 15 | 5 |

### b) Rauchdichtemessungen

Durchführung wie Vergleichsbeispiel 1, Ergebnisse in Tabelle 23

**Tabelle 23: Rauchdichte-Prüfung mit Beflammung von Beispiel 4; FAR 25.853 (c)**

| Probe | Optische Dichte zur Zeit t in [min] | | | | | | | Ds max innerhalb 4 min |
|---|---|---|---|---|---|---|---|---|
| | 1 | 1,5 | 2 | 3 | 4 | 5 | 6 | |
| 1 | 13 | 30 | 50 | 84 | 138 | 147 | 143 | 138 |
| 2 | 9 | 23 | 35 | 53 | 67 | 75 | 84 | 67 |
| 3 | 11 | 31 | 43 | 75 | 122 | 141 | 157 | 122 |
| 4 | 14 | 29 | 42 | 71 | 98 | 109 | 113 | 98 |
| Mittelwert | 12 | 28 | 43 | 71 | 106 | 118 | 124 | 106 |
| Grenzwert gemäß FAR 25.853 (c) | | | | | | | | 200 |

### c) Rauchgasanalyse

Durchführung wie Vergleichsbeispiel 1, Ergebnisse in Tabelle 24

**Tabelle 24: Rauchgasanalyse von Beispiel 4; AITM 3.0005**

| Gaskomponente | Grenzwert in [ppm] nach 4 min | nachgewiesen in [ppm] nach 4 min |
|---|---|---|
| HCN | 150 | 0,0 |
| CO | 3500 | 100 |
| NO+NO₂ | 100 | 1,5 |
| SO₂ + H₂S | 100 | 0,0 |
| HF | 100 | ./. |
| HCl | 150 | ./. |

| | | |
|---|---|---|
| ./. nicht bestimmt | | |

## Patentansprüche

1. Thermoplastisch formbarer Polycarbonat-Verbundwerkstoff mit wenigstens zwei Schichten, **dadurch gekennzeichnet, daß** mindestens eine Schicht einen LOI-Wert kleiner 29 und mindestens eine Schicht einen LOI-Wert größer 29 aufweist.

2. Thermoplastisch formbarer Polycarbonat-Verbundwerkstoff gemäß Anspruch 1, **dadurch gekennzeichnet, daß** die mindestens eine Schicht mit einem LOI-Wert größer 29 aus einer Mischung bestehend aus
a) 40 bis 100 Gew.-% bezogen auf das Gesamtgewicht der Mischung wenigstens eines Polycarbonates
b) 0 bis 40 Gew.-% bezogen auf das Gesamtgewicht der Mischung wenigstens eines Polymers aus der Gruppe bestehend aus Poly(meth)acrylate, Polyester, Polyamide, Polyimide, Polyurethane, Polyether, ABS, ASA und PBT
c) 0 bis 10 Gew.-% bezogen auf das Gesamtgewicht der Mischung wenigstens eines Flammschutzmittels und/oder flammhemmenden Additivs
d) 0 bis 10 Gew.-% bezogen auf das Gesamtgewicht der Mischung wenigstens eines Zusatzstoffes aus der Gruppe bestehend aus Antistatika, Antioxidantien, Farbstoffe, Füllstoffe, Lichtstabilisatoren, Pigmente, UV-Absorber, Verwitterungsschutzmittel und Weichmacher,
wobei die Summe von a), b), c) und d) 100 Gew.-% ergibt, erhältlich ist.

3. Thermoplastisch formbarer Polycarbonat-Verbundwerkstoff gemäß Anspruch 1 oder 2, **dadurch gekennzeichnet, daß** die mindestens eine Schicht mit einem LOI-Wert kleiner 29 aus einer Mischung bestehend aus
e) 40 bis 100 Gew.-% bezogen auf das Gesamtgewicht der Mischung wenigstens eines Polycarbonates
f) 0 bis 40 Gew.-% bezogen auf das Gesamtgewicht der Mischung wenigstens eines Polymers aus der Gruppe bestehend aus Poly(meth)acrylate, Polyester, Polyamide, Polyimide, Polyurethane, Polyether, ABS, ASA und PBT
g) 0 bis 10 Gew.-% bezogen auf das Gesamtgewicht der Mischung wenigstens eines Zusatzstoffes aus der Gruppe bestehend aus Antistatika, Antioxidantien, Farbstoffe, Füllstoffe, Lichtstabilisatoren, Pigmente, UV-Absorber, Verwitterungsschutzmittel und Weichmacher,
wobei die Summe von e), f), und g) 100 Gew.-% ergibt, erhältlich ist.

4. Thermoplastisch formbarer Polycarbonat-Verbundwerkstoff gemäß mindestens einem der vorangehenden Ansprüche, **dadurch gekennzeichnet, daß** er aus 2, 3, 4 oder 5 Schichten besteht.

5. Thermoplastisch formbarer Polycarbonat-Verbundwerkstoff gemäß mindestens einem der vorangehenden Ansprüche, **dadurch gekennzeichnet, daß** das Verhältnis der Dicke von der mindestens einen Schicht mit einem LOI-Wert kleiner 29 und der Dicke von der mindestens einen Schicht einen LOI-Wert größer 29 im Bereich zwischen 0,01 und 0,5 ist.

6. Thermoplastisch formbarer Polycarbonat-Verbundwerkstoff gemäß mindestens einem der vorangehenden Ansprüche, **dadurch gekennzeichnet, daß** das Verhältnis der Masse von der mindestens einen Schicht mit einem LOI-Wert kleiner 29 und der Masse von der mindestens einen Schicht einen LOI-Wert größer 29 im Bereich zwischen 0,01 und 0,5 ist.

7. Thermoplastisch formbarer Polycarbonat-Verbundwerkstoff gemäß mindestens einem der vorangehenden Ansprüche, **dadurch gekennzeichnet, daß** die mindestens einen Polycarbonat-Schicht mit einem LOI-Wert kleiner 29 zwischen 30 µm bis 500 µm dick ist.

8. Thermoplastisch formbarer Polycarbonat-Verbundwerkstoff gemäß mindestens einem der vorangehenden Ansprüche, **dadurch gekennzeichnet, daß** die mindestens einen Polycarbonat-Schicht mit einem LOI-Wert größer 29 zwischen 0,7 mm bis 3 mm dick ist.

9. Thermoplastisch formbarer Polycarbonat-Verbundwerkstoff gemäß mindestens einem der vorangehenden Ansprüche, **dadurch gekennzeichnet, daß** eine Polycarbonat-Schicht mit einem LOI-Wert kleiner 29 eine Außenschicht des Polycarbonat-Verbundwerkstoffes ist.

10. Thermoplastisch formbarer Polycarbonat-Verbundwerkstoff gemäß mindestens einem der vorangehenden Ansprüche, **dadurch gekennzeichnet, daß** er zwischen einer Schicht mit einem LOI-Wert größer 29 und einer Schicht mit einem LOI-Wert kleiner 29 eine dritte Schicht aufweist, wobei die dritte Schicht eine Dekorschicht ist.

11. Thermoplastisch formbarer Polycarbonat-Verbundwerkstoff gemäß mindestens einem der vorangehenden Ansprüche, **dadurch gekennzeichnet, daß** er bei einer vertikalen Kantenbeflammung für 60 Sekunden gemäß FAR 25.853 (a) (1) (i) eine zerstörte Länge kleiner 150 mm aufweist, die Nachbrenndauer kürzer als 15 Sekunden und die Brenndauer von abtropfenden Material kleiner 3 Sekunden ist.

12. Thermoplastisch formbarer Polycarbonat-Verbundwerkstoff gemäß mindestens einem der vorangehenden Ansprüche, **dadurch gekennzeichnet, daß** die spezifische optische Dichte gemäß FAR 25.853 (c) und AITM 2.0007 während eines Versuchszeitraumes von vier Minuten nicht über Dsₘₐₓ = 200 liegt.

13. Verfahren zur Herstellung eines thermoplastisch formbaren Polycarbonat-Verbundwerkstoffes gemäß mindestens einem der vorangehenden Ansprüche, **dadurch gekennzeichnet, daß** man
a) mindestens eine Trockenmischung mit einem LOI-Wert kleiner 29 und mindestens eine Trockenmischung mit einem LOI-Wert größer 29 extrudiert und
b) die entstehenden Folien und gegebenenfalls weitere Folien miteinander laminiert, um den thermoplastisch formbaren Verbundwerkstoff zu erhalten.

14. Verfahren zur Herstellung eines thermoplastisch formbaren Polycarbonat-Verbundwerkstoffes gemäß mindestens einem der vorangehenden Ansprüche, **dadurch gekennzeichnet, daß** man
a) die Oberfläche mindestens einer Folie mit einem LOI-Wert kleiner 29 optisch gestaltet und daran anschließend
b) die optisch gestaltete Folie mit einem LOI-Wert kleiner 29 mit einer Folie mit einem LOI-Wert größer 29 derart laminiert, daß der resultierende thermoplastisch formbare Polycarbonat-Verbundwerkstoff mindestens eine Dekorschicht zwischen einer Schicht mit einem LOI-Wert kleiner 29 und einer Schicht mit einem LOI-Wert größer 29 aufweist.

15. Flammgeschütztes Polycarbonat-Formteil erhältlich durch ein Verfahren bei dem man einen thermoplastisch formbaren Polycarbonat-Verbundwerkstoff gemäß mindestens einem der Ansprüche 1 bis 12 thermoplastisch formt.

16. Verwendung eines thermoplastisch formbaren Polycarbonat-Verbundstoffes gemäß Anspruch 15 im Bereich des Flugzeugbaus.

## Claims

1. Thermoplastically mouldable polycarbonate composite material having at least two layers, **characterised in that** at least one layer has an LOI value of less than 29 and at least one layer has an LOI value greater than 29.

2. Thermoplastically mouldable polycarbonate composite material according to claim 1, **characterised in that** the minimum of one layer having an LOI value greater than 29 may be obtained from a mixture consisting of
a) 40 to 100 wt.%, based on the total weight of the mixture, of at least one polycarbonate,
b) 0 to 40 wt.% , based on the total weight of the mixture, of at least one polymer selected from among poly(meth) acrylates, polyesters, polyamides, polyimides, polyurethanes, polyethers, ABS, ASA and PBT,
c) 0 to 10 wt.% , based on the total weight of the mixture, of at least one flame-proofing agent and/or flame retardant additive,
d) 0 to 10 wt.%, based on the total weight of the mixture, of at least one additive selected from among antistatics, antioxidants, dyes, fillers, light stabilisers, pigments, UV absorbers, anti-weathering agents and plasticisers,
the sum of a), b), c) and d) being 100 wt.%.

3. Thermoplastically mouldable polycarbonate composite material according to claim 1 or 2, **characterised in that** the minimum of one layer having an LOI value of less than 29 may be obtained from a mixture consisting of
e) 40 to 100 wt.%, based on the total weight of the mixture, of at least one polycarbonate
f) 0 to 40 wt.%, based on the total weight of the mixture, of at least one polymer selected from among poly(meth)acrylates, polyesters, polyamides, polyimides, polyurethanes, polyethers, ABS, ASA and PBT
g) 0 to 10 wt.%, based on the total weight of the mixture, of at least one additive selected from among antistatics, antioxidants, dyes, fillers, light stabilisers, pigments, UV absorbers, anti-weathering agents and plasticisers,
the sum of e), f) and g) being 100 wt.%.

4. Thermoplastically mouldable polycarbonate composite material according to at least one of the preceding claims, **characterised in that** it consists of 2, 3, 4 or 5 layers.

5. Thermoplastically mouldable polycarbonate composite material according to at least one of the preceding claims, **characterised in that** the ratio of the thickness of the minimum of one layer having an LOI value of less than 29 to the thickness of the minimum of one layer having an LOI value of more than 29 is in the range between 0.01 and 0.5.

6. Thermoplastically mouldable polycarbonate composite material according to at least one of the preceding claims, **characterised in that** the ratio of the mass of the minimum of one layer having an LOI value of less than 29 to the mass of the minimum of one layer having an LOI value of more than 29 is in the range between 0.01 and 0.5.

7. Thermoplastically mouldable polycarbonate composite material according to at least one of the preceding claims, **characterised in that** the minimum of one polycarbonate layer having an LOI value of less than 29 is between 30 µm and 500 µm thick.

8. Thermoplastically mouldable polycarbonate composite material according to at least one of the preceding claims, **characterised in that** the minimum of one polycarbonate layer having an LOI value of more than 29 is between 0.7 mm and 3 mm thick.

9. Thermoplastically mouldable polycarbonate composite material according to at least one of the preceding claims, **characterised in that** a polycarbonate layer with an LOI value of less than 29 is an outer layer of the polycarbonate composite material.

10. Thermoplastically mouldable polycarbonate composite material according to at least one of the preceding claims, **characterised in that** it comprises, between a layer with an LOI value of more than 29 and a layer with an LOI value of less than 29, a third layer, said third layer being a decorative layer.

11. Thermoplastically mouldable polycarbonate composite material according to at least one of the preceding claims, **characterised in that** when a flame is applied vertically to the edges for 60 seconds in accordance with FAR 25.853 (a)(1)(i), the length destroyed is less than 150 mm, the after-burn time is less than 15 seconds and the burning time for dripping material is less than 3 seconds.

12. Thermoplastically mouldable polycarbonate composite material according to at least one of the preceding claims, **characterised in that** the specific optical density according to FAR 25.853 (c) and AITM 2.0007 during a test period of 4 minutes is not more than D_{Smax} = 200.

13. Method of producing a thermoplastically mouldable polycarbonate composite material according to at least one of the preceding claims, **characterised in that**
a) at least one dry mixture with an LOI value of less than 29 and at least one dry mixture with an LOI value of more than 29 are extruded and
b) the resulting films and optionally other films are laminated together in order to produce the thermoplastically mouldable composite material.

14. Method of producing a thermoplastically mouldable polycarbonate composite material according to at least one of the preceding claims, **characterised in that**
a) the surface of at least one film with an LOI value of less than 29 is of optical design and then
b) the optically designed film with an LOI value of less than 29 is laminated with a film having an LOI value of more than 29 such that the resulting thermoplastically mouldable polycarbonate composite material has at least one decorative layer between a layer with an LOI value of less than 29 and a layer with an LOI value of more than 29.

15. Flame-proofed polycarbonate moulding obtainable by a method in which a thermoplastically mouldable polycarbonate composite material according to at least one of claims 1 to 12 is thermoplastically shaped.

16. Use of a thermoplastically mouldable polycarbonate composite material according to claim 15 in the field of aircraft construction.

## Revendications

1. Matériau composite à base de polycarbonate thermoplastiquement formable comportant au moins deux couches,
**caractérisé en ce qu'**
au moins une couche présente un indice limite d'oxygène inférieur à 29 et au moins une couche présente un indice limite d'oxygène supérieur à 29.

2. Matériau composite à base de polycarbonate thermoplastiquement formable selon la revendication 1,
**caractérisé en ce qu'**
au moins une couche présentant un indice limite d'oxygène supérieur à 29 peut être obtenue à partir d'un mélange constitué de :
a) 40 % à 100 % en poids, sur la base du poids total du mélange, d'au moins un polycarbonate,
b) 0 % à 40 % en poids, sur la base du poids total du mélange, d'au moins un polymère appartenant au groupe constitué des poly-(méth)acrylates, des polyesters, des polyamides, des polyimides, des polyuréthanes, des polyéthers, du copolymère d'acrylonitrile - butadième - styrène (ABS), du copolymère d'acide acrylique - styrène - acrylonitrile (ASA) et du copolymère de téréphtalate de polybutylène (PBT),
c) 0 % à 10 % en poids, sur la base du poids total du mélange, d'au moins un additif ignifuge et/ou retardateur de flamme,
d) 0 %à 10 % en poids, sur la base du poids total du mélange, d'au moins un additif appartenant au groupe constitué des antistatiques, des antioxydants, des colorants, des charges, des photostabilisants, des pigments, des absorbeurs d'UV, des produits de protection contre les intempéries et des plastifiants,
la somme de a), b), c), et d) représentant 100 % en poids.

3. Matériau composite à base de polycarbonate thermoplastiquement formable selon la revendication 1 ou 2,
**caractérisé en ce qu'**
au moins une couche présentant un indice limite d'oxygène (LOI) inférieur à 29 peut être obtenue à partir d'un mélange constitué de :
e) 40 % à 100 % en poids, sur la base du poids total du mélange, d'au moins un polycarbonate,
f) 0 % à 40 % en poids, sur la base du poids total du mélange, d'au moins un polymère appartenant au groupe constitué des poly-(méth)acrylates, des polyesters, des polyamides, des polyimides, des polyuréthanes, des polyéthers, du copolymère d'acrylonitrile - butadième - styrène (ABS), du copolymère d'acide acrylique - styrène - acrylonitrile (ASA) et du copolymère de téréphtalate de polybutylène (PBT),
g) 0 % à 10 % en poids, sur la base du poids total du mélange, d'au moins un additif appartenant au groupe constitué des antistatiques, des antioxydants, des colorants, des charges, des photostabilisants, des pigments, des absorbeurs d'UV, des produits de protection contre les intempéries et des plastifiants,
la somme de e), f), et g) représentant 100 % en poids.

4. Matériau composite à base de polycarbonate thermoplastiquement formable selon au moins l'une quelconque des revendications précédentes,
**caractérisé en ce qu'**
il est constitué de 2, 3, 4 ou 5 couches.

5. Matériau composite à base de polycarbonate thermoplastiquement formable selon au moins l'une quelconque des revendications précédentes,
**caractérisé en ce que**
le rapport de l'épaisseur d'au moins une couche présentant un indice limite d'oxygène (LOI) inférieur à 29 et l'épaisseur d'au moins une couche présentant un indice limite d'oxygène (LOI) supérieur à 29 est comprise entre 0,01 et 0,5.

6. Matériau composite à base de polycarbonate thermoplastiquement formable selon au moins l'une quelconque des revendications précédentes,
**caractérisé en ce que**
le rapport de la masse d'au moins une couche présentant un indice limite d'oxygène (LOI) inférieur à 29 à la masse d'au moins une couche présentant un indice limite d'oxygène (LOI) supérieur à 29 est comprise entre 0,01 et 0, 5.

7. Matériau composite à base de polycarbonate thermoplastiquement formable selon au moins l'une quelconque des revendications précédentes,
**caractérisé en ce qu'**
au moins une couche à base de polycarbonate présentant un indice limite d'oxygène (LOI) inférieur à 29 a une épaisseur comprise entre 30 µm et 500 µm.

8. Matériau composite à base de polycarbonate thermoplastiquement formable selon au moins l'une quelconque des revendications précédentes,
**caractérisé en ce qu'**
au moins une couche à base de polycarbonate présentant un indice limite d'oxygène (LOI) supérieur à 29 a une épaisseur comprise entre 0,7 mm et 3mm.

9. Matériau composite à base de polycarbonate thermoplastiquement formable selon au moins l'une quelconque des revendications précédentes,
**caractérisé en ce qu'**
une couche à base de polycarbonate présentant un indice limite d'oxygène (LOI) inférieur à 29 est une couche extérieure du matériau composite à base de polycarbonate.

10. Matériau composite à base de polycarbonate thermoplastiquement formable selon au moins l'une quelconque des revendications précédentes,
**caractérisé en ce qu'**
il comporte, entre une couche présentant un indice limite d'oxygène (LOI) supérieur à 29 et une couche présentant un indice limite d'oxygène (LOI) inférieur à 29, une troisième couche, cette troisième couche étant une couche décorative.

11. Matériau composite à base de polycarbonate thermoplastiquement formable selon au moins l'une quelconque des revendications précédentes,
**caractérisé en ce qu'**
il présente, après application d'une flamme verticale sur un bord pendant 60 secondes, selon FAR 25 853 (a) (1) (i), une longueur détruite inférieure à 150 mm, la durée de post-combustion est inférieure à 15 secondes et la durée de combustion de la matière qui tombe en forme de gouttes est inférieure à 3 secondes.

12. Matériau composite à base de polycarbonate thermoplastiquement formable selon au moins l'une quelconque des revendications précédentes,
**caractérisé en ce que**
la densité optique spécifique selon FAR 25 853 (c) et AITM 2.0007, pendant une période d'essai de quatre minutes, n'est pas supérieure à Dsₘₐₓ = 200.

13. Procédé de fabrication d'un matériau composite à base de polycarbonate thermoplastiquement formable selon au moins l'une quelconque des revendications précédentes,
**caractérisé en ce que** :
a) on extrude au moins un mélange sec présentant un indice limite d'oxygène (LOI) inférieur à 29 et au moins un mélange sec présentant un indice limite d'oxygène (LOI) supérieur à 29, et
b) on stratifie entre elles les feuilles formées et le cas échéant d'autres feuilles, pour obtenir le matériau composite thermoplastiquement formable.

14. Procédé de fabrication d'un matériau composite à base de polycarbonate thermoplastiquement formable selon au moins l'une quelconque des revendications précédentes,
**caractérisé en ce que**
a) on configure optiquement la surface d'au moins une feuille présentant un indice limite d'oxygène (LOI) inférieur à 29 et ensuite,
b) on stratifie la feuille optiquement configurée présentant un indice limite d'oxygène (LOI) inférieur à 29 avec une feuille présentant un indice limite d'oxygène (LOI) supérieur à 29, de telle sorte que le matériau composite à base de polycarbonate thermoplastiquement formable résultant comporte au moins une couche décorative entre une couche présentant un indice limite d'oxygène (LOI) inférieur à 29 et une couche présentant un indice limite d'oxygène (LOI) supérieur à 29.

15. Pièce formée à base de polycarbonate ignifuge pouvant être obtenue par un procédé dans lequel on forme thermoplastiquement un matériau composite à base de polycarbonate thermoplastiquement formable selon au moins l'une des revendications 1 à 12.

16. Utilisation d'un matériau composite à base de polycarbonate thermoplastiquement formable selon la revendication 15 dans le domaine de la construction aéronautique.
